# EUROPÄISCHE PATENTSCHRIFT

(11) **EP 1 307 855 B1**
(45) Veröffentlichungstag und Bekanntmachung des Hinweises auf die Patenterteilung: **25.08.2004**
(21) Anmeldenummer: 01965144.7
(22) Anmeldetag: 26.07.2001
(51) Int. Cl.: G06K 13/08, G06K 19/06, G06K 7/10

(54) **LESEVORRICHTUNG MIT STRICHCODE-BERECHTIGUNGSKARTEN**
READER DEVICE WITH BAR-CODED AUTHORISATION CARDS
DISPOSITIF DE LECTURE DE CARTES D'AUTORISATION A CODE BARRES

(30) Priorität: 07.08.2000 DE 10038470
(43) Veröffentlichungstag der Anmeldung: 07.05.2003
(73) Patentinhaber: SkiData AG, 5083 Gartenau (AT)
(72) Erfinder: STOCKHAMMER, Rudolf, A-5340 St. Gilgen (AT)
(74) Vertreter: Berngruber, Otto, Dr. Dipl.-Chem.
(86) Internationale Anmeldenummer: PCT/EP2001/008682
(87) Internationale Veröffentlichungsnummer: WO 2002/013130

(56) Entgegenhaltungen:
- EP-A- 0 446 164
- EP-A- 0 571 259
- EP-A- 0 607 444
- EP-A- 0 663 643
- WO-A-89/05498
- DE-A- 3 910 633
- DE-U- 29 516 201
- US-A- 5 422 744
- US-A- 6 062 473

## Beschreibung

Die Erfindung bezieht sich auf ein System mit einer Lesevorrichtung und damit lesbaren Berechtigungskarten mit einem Strichcode.

Derartige Karten-Lesevorrichtungen sind seit langem bekannt. Sie werden bevorzugt an Zugangskontrollanlagen eingesetzt, die im allgemeinen eine Personenvereinzelungseinrichtung, wie ein Drehkreuz, aufweisen, das durch die Lesevorrichtung betätigt bzw. entsperrt wird, wenn der Kartenleser einen entsprechenden Strichcode abtastet. Die Karte wird dabei durch den Einführschlitz bis zu einem Anschlag in dem Gehäuse gesteckt, wobei der Lesekopf im Gehäuse derart angeordnet ist, dass seine Abtastzeile den Strichcode abtastet, wenn die Karte den Anschlag erreicht. Das heißt, der Abstand zwischen der Abtastzeile des Lesekopfs und dem Anschlag entspricht dem Abstand zwischen der Vorderkante der Karte und dem auf der Karte quer verlaufenden Strichcodefeld. Nach dem Abtasten wird die Karte herausgezogen und beispielsweise der Zugang bei gültigem Strichcode freigegeben.

Der den Strichcode zeilenförmig quer zur Karteineinführrichtung abtastende Lesekopf kann beispiels-weise ein CCD (Charged Coupled Device)-Liniensensor sein, der sich quer über die eingeführte Karte erstreckt und das von dem Strichcode reflektierte Licht empfängt, das von einer Lichtquelle, beispielsweise LEDs (Light Emitting Diode) ausgesendet wird.

Ein Großteil der Berechtigungskarten, beispielsweise für Sport- oder Freizeitveranstaltungen, wird dezentral von unterschiedlichen Kartenausgabestellen ausgegeben. Die einzelnen Kartenausgabestellen verfügen häufig über unterschiedliche Drucker oder legen Wert auf ein eigenes spezielles Kartendesign. Demgemäß werden für die gleiche Veranstaltung häufig Strichcode-Berechtiungskarten verwendet, die sich im Format und in der Position des Strichcodefeldes deutlich unterscheiden.

Um Karten unterschiedlichen Formats und unterschiedlicher Position des Strichcodes lesen zu können, sind omnidirektionale Strichcodeleser verwendet worden, wie sie an Supermarkt- und Kaufhauskassen vorzufinden sind. Dabei wird die Karte an eine transparente Platte gelegt, um den Strichcode zu beleuchten und mit einem Laserstrahl richtungsunabhängig zu erfassen.

Zwar sind die meisten Leute daran gewöhnt, Berechtigungskarten, beispielsweise zum Entwerten, zur Überprüfung ihrer Gültigkeit und zur Inanspruchnahme einer Leistung in ein Lesegerät mit einer schlitzförmigen Einführöffnung zu stecken, mit der Benutzung solcher omnidirektionaler Strichcodeleser sind sie jedoch meist nicht vertraut. Die omnidirektionalen Kartenstrichcodeleser können daher insbesondere bei Massenveranstaltungen zu erheblichen Staus an den Zugangskontrollanlagen führen.

Aus US-A-6062473 ist eine Lesevorrichtung nach dem Oberbegriff des Anspruches 1 bekannt. Dabei wird die Karte der Breite nach in die Einführöffnung gesteckt. Das Lesen der Karte erfolgt nach Erreichen des Anschlags. Um die Karte so weit einschieben zu können, ist an der Einführöffnung eine Fingermulde vorgesehen. Mit einem omnidirektionalen Strichcodeleser können Karten mit unterschiedlicher Position des Strichcodefeldes sowie andere Strichcode-Belege gelesen werden, die dazu in eine Ausnehmung unter den Einführschlitz gelegt werden.

Nach EP-A-0446164 wird das Strichcodefeld in Längsrichtung gelesen. Nach US-A-5422744 wird die Strichcodekarte durch einen Kanal gezogen, der einen CCD-Sensor aufweist. Nach EP-A-0607444 wird eine Strichcodekarte über einen Einführschlitz mit Transportrollen einem Leser, einem Löschabschnitt und einer Aufzeichnungsstation zugeführt. Aus US-A-5777314, US-A-5053612, US-A-5939699 und JP-A-07131645 gehen Strichcodeleser hervor, mit denen der Strichcode mit Licht bestrahlt und von einem Zeilen-CCD-Sensor ausgewertet wird.

Aufgabe der Erfindung ist es, eine einfach aufgebaute, für jedermann problemlos und schnell bedienbare Lesevorrichtung für Strichcode-Karten unterschiedlichen Formats und unterschiedlicher Position des Strichcodefeldes bereitzustellen.

Dies wird erfindungsgemäß mit dem im Anspruch 1 angegebenen System erreicht. In den Unteransprüchen sind vorteilhafte Ausgestaltungen der Erfindung wiedergegeben.

Nach der Erfindung ist der Innenraum im Gehäuse des Lesers, in den die Karte durch den Einführschlitz gesteckt wird, derart lang ausgebildet, dass die Karte über die Abtastzeile des Lesekopfs hinaus um eine Strecke weiter einführbar ist, die größer ist als der Abstand zwischen der Vorderkante der Karte und dem von der Vorderkante abgewandten Ende des Strichcode-Feldes.

Das Abtasten des Strichcodes mit dem Lesekopf erfolgt erfindungsgemäß damit während des Einschiebens, also während der Bewegung der Karte, die in Längsrichtung eingeführt wird.

Damit auch Karten gelesen werden können, bei denen der Strichcode in einem größeren Abstand von der Vorderkante angebracht ist, ist der Lesekopf im Gehäuse am Einführschlitz, also möglichst knapp hinter dem Einführschlitz angeordnet, vorzugsweise derart, dass der Abstand der Abtastzeile des Lesekopfes vom Einführschlitz höchstens das vierfache, vorzugsweise höchstens das zweifache, insbesondere höchstens der Länge des Strichcodefeldes in Einführrichtung beträgt.

Damit die Abtastzeile des Lesekopfes möglichst knapp hinter dem Einführschlitz verläuft, kann der Lesekopf schräg angeordnet werden, also z. B. derart, dass die Lichtstrahlen von der Abtastzeile, also dem Strichcode auf der Karte, schräg nach hinten, d. h. vom Einführschlitz weg zum optisch/elektrischen Wandler des Lesekopfes zurückgeworfen werden.

Damit auch die breitesten Karten eingeführt werden können, sind die Einführöffnung und die Führung der Karte im Gehäuse entsprechend breit ausgebildet. Die Führungsbahn kann gerade verlaufen, gegebenenfalls aber auch gekrümmt sein.

Mit der erfindungsgemäßen Vorrichtung können also alle Kartenformate auch unterschiedlicher Breite vom ISO-Ticket bis zum IATA-Ticket gelesen werden.

Die Karte wird beim Einstecken zum einen durch den Einführschlitz geführt, zur weiteren Führung und damit Definition der Bewegungsbahn der Karte können im Gehäuse dann unterschiedliche Einrichtungen vorgesehen sein, beispielsweise eine oder zwei Führungsnuten, die die eine bzw. beide Längskanten der Karte aufnehmen.

Der den Strichcode in einer Zeile quer zur Karteneinführrichtung abtastende Lesekopf der erfindungsgemäßen Vorrichtung weist als optisch/elektrischen Wandler einen CCD-Liniensensor auf, der sich quer über die Karte erstreckt und das von dem Strichcode reflektierte Licht empfängt, das eine Lichtquelle, beispielsweise LEDs aussenden. Das inkohärente Licht der Lichtquelle bzw. der LEDs fallen als quer zur Einführrichtung verlaufende Zeile auf die Karte.

Berechtigungskarten können einen Strichcode aufweisen, der im sichtbaren Bereich optisch abgetastet werden kann, oder einen im Infrarot-Bereich abtastbaren Strichcode, der im Gegensatz zu einem im sichtbaren Bereich abtastbaren Strichcode z. B. mit einem Kopiergerät nicht unbefugt dupliziert werden kann.

Um sowohl Karten mit einem Strichcode im sichtbaren Bereich wie Karten mit einem Strichcode im Infrarotbereich optisch abtasten zu können, weist die erfindungsgemäße Vorrichtung vorzugsweise zwei in Einführrichtung hintereinander angeordnete Leseköpfe zum optischen Abtasten im sichtbaren bzw. IR-Bereich auf.

Der Lesekopf für den sichtbaren Bereich und/oder der Lesekopf für den IR-Bereich können beide auf einer Seite der Kartenführung angeordnet sein, z. B. oben. Es besteht darüber hinaus die Möglichkeit, zusätzlich einen oder mehrere Leseköpfe für den IR- und/oder sichtbaren Bereich auch auf der anderen Seite der Kartenführung, also z. B. unterhalb, anzuordnen, um zu ermöglichen, dass auch Karten, die verkehrt herum eingeführt werden, lesbar sind. Sollte aus Platzgründen eine Installation von weiteren Leseköpfen auf der anderen Seite bzw. unterhalb der Kartenführung nicht möglich sein, kann diese Funktion auch durch einen der anderen Seite bzw. unterhalb der Kartenführung angeordneten Spiegel erreicht werden, der das Licht zu dem bzw. den auf der einen Seite, also z. B. oberhalb der Führung angeordneten Lesekopf bzw. Leseköpfen umlenkt.

Da im sichtbaren Lichtbereich abtastbare Strichcodes auf Berechtigungskarten häufiger vorkommen als mit IR-Licht abtastbare Strichcodes, ist der Lesekopf zum Abtasten im sichtbaren Bereich vor dem Lesekopf zum Abtasten im IR-Bereich angeordnet.

Jeder Lesekopf tastet eine einzige Zeile auf der jeweiligen Seite der Karte ab. Die Abtastzeile des mit sichtbaren Licht abtastbaren Lesekopfes und die Abtastzeile des mit IR-Licht abtastenden Lesekopfes können einen geringen Abstand voneinander aufweisen, der vorzugsweise geringer als die Länge des Strichcodefeldes in Einführrichtung ist. Der Abstand dieser beiden Abtastzeilen kann jedoch auch größer sein, z. B. wenn ein Strichcode für IR-Licht und ein Strichcode für sichtbares Licht im Abstand voneinander auf der Karte angebracht sind. Die Breite jeder Abtastzeile ist um ein Vielfaches, mindestens das 3-fache geringer als die Länge des Strichcodefeldes in Einrührrichtung.

Statt jeweils einen Lesekopf für sichtbares und IR-Licht kann auch nur ein einziger Lesekopf vorgesehen sein, der den Strichcode sowohl mit sichtbarem wie mit IR-Licht abtastet. Das sichtbare und das IR-Licht dieses Lesekopfes kann durch das auf der anderen Seite angeordneten Spiegel umgelenkt werden.

Die erfindungsgemäße Vorrichtung kann ferner im Innenraum des Gehäuses einen zur Einführrichtung senkrecht verlaufenden Anschlag aufweisen. Dieser Anschlag ist vom Einführschlitz hinreichend weit entfernt, um sicherzustellen, dass der Strichcode auch auf der längsten einzuführenden Karte während der Bewegung beim Einführen der Karte in den Innenraum bzw. beim Herausziehen der Karte aus dem Innenraum vom Lesekopf gelesen werden kann. Das heißt, der Abstand zwischen dem Anschlag und der Abtastzeile des Lesekopfes ist größer als der Abstand zwischen der Vorderkante der Karte und dem von der Vorderkante abgewandten Ende des Strichcodefeldes. Der Anschlag hat den Zweck, eine Karte gerade auszurichten, wenn sie schräg in den Einführschlitz gesteckt worden ist, sodass sie von der Abtastzeile des Lesekopfes nicht bzw. nicht mehr vollständig erfaßt werden kann.

Um die Einschaltzeit des Lesekopfes auf den Abtastvorgang zu beschränken, ist vorzugsweise zwischen Einführschlitz und Abtastzeile des Lesekopfes ein Sensor, beispielsweise eine Lichtschranke vorgesehen, die die eingeführte Vorderkante der Karte erfaßt und damit den Lesekopf beim Einführen der Karte ein- und beim Herausziehen der Karte wieder ausschaltet.

Bei der dezentralen Vergabe von Karten kommt es vor, dass ein bestimmter Strichcode, also eine bestimmte Zahl, zweimal vergeben wird. Demgemäß ist erfindungsgemäß vorzugsweise ein die Breite der Karte erfassender Sensor, also z. B. eine Lichtschranke, vorgesehen. Die Breite der Karte kann damit als zusätzliches Berechtigungskriterium zum Strichcode bei Kontrolle der Karte herangezogen werden.

Die erfindungsgemäße Vorrichtung zum Lesen einer Berechtigungskarte mit einem Strichcode kann auch einen Sensor zur Erfassung biometrischer Identifikationsmerkmale (z.B. Fingerprint, Iris, subkutane Blutgefäße) aufweisen, ferner einen Speicher, in dem die biometrischen Identifikationsmerkmale der berechtigten Person abgelegt sind sowie eine Einrichtung zum Vergleich der gespeicherten und der erfaßten biometrischen Identifikationsmerkmale.

Außerdem kann die erfindungsgemäße Vorrichtung eine Leseund/oder Schreibeinrichtung für einen RFID-Datenträger aufweisen, wobei letzterer durch eine Armbanduhr mit integriertem Transponder oder durch eine Berechtigungskarte gebildet sein kann, der neben dem Strichcode einen Transponder aufweist.

Zudem kann die erfindungsgemäße Vorrichtung für eine Funkverbindung mit einem Mobiltelefon nach der Bluetooth-Technik ausgebildet sein, wobei die Zutrittsberechtigung im Mobiltelefon abgelegt ist und die Vorrichtung Zugriff auf die Daten aller zutrittsberechtigungen hat, um die in den Mobiltelefonen abgelegte Zutrittsberechtigung zu prüfen.

Nachstehend ist eine Ausführungsform der erfindungsgemäßen Vorrichtung anhand der Zeichnung beispielhaft näher erläutert. Darin zeigen
Figur 1 schematisch einen Längsschnitt durch einen Kartenleser; und
Figur 2 und 3 jeweils eine Draufsicht auf die in den Leser nach Figur 1 gesteckte Karte mit Stichcodefeldern mit unterschiedlichem Abstand von der Kartenvorderkante.

Die Lesevorrichtung 1 ist zum Lesen einer Berechtigungskarte 2 mit einem Feld 3 mit einem Strichcode 4 bestimmt. Die Vorrichtung 1 weist ein Gehäuse 5 auf, das an seiner Vorderseite am Ende eines im Querschnitt sich trichterförmig verjüngenden Maules 7 einen Einführschlitz 6 aufweist, in den die Karte 2 gesteckt wird und zwar in Längsrichtung, d.h. die Einführrichtung 14 entspricht der Länge a der Karte 2.

In dem Innenraum 8 des Gehäuses 5 sind unmittelbar hinter dem Einführschlitz 6 zwei Leseköpfe 10 und 11 nacheinander angeordnet.

Der vordere Lesekopf 10 ist zum Abtasten des Strichcodes 4 im sichtbaren Lichtbereich ausgebildet, und der Lesekopf 11 zum Abtasten eines Strichcodes auf der Karte 2 im IR-Bereich.

Die Leseköpfe 10 und 11 tasten den Strichcode 4 in jeweils einer Zeile 12 bzw. 13 ab, die quer zur Einführrichtung 14 der Karte 2 verläuft. Jeder Lesekopf 10, 11 kann dazu nicht näher dargestellte LEDs als Lichtquelle aufweisen, deren Licht gemäß den Pfeilen 15, 16 als Zeile 12 bzw. 13 auf das Strichcodefeld 3 fällt. Das Licht der Abtastzeilen 12, 13 wird gemäß den Pfeilen 17, 18 zu einem nicht näher dargestellten optisch/elektrischen Wandler, beispielsweise einem CCD-Liniensensor reflektiert, der sich quer zur Einführrichtung 14 über die Karte 2 erstreckt. An den optisch/elektrischen Wandler ist die übliche nicht näher dargestellte Auswerteelektronik des Lesers angeschlossen. Die Breite jeder Abtastzeile 12, 13 ist um ein Vielfaches kleiner als die Länge l des Strichcodefeldes 3 in Einführrichtung 14.

Mit den beiden Leseköpfen 10, 11 können Karten unterschiedlichen Formats, also unterschiedlicher Länge a und unterschiedlicher Breite b, und mit Strichcodefeldern 3 mit unterschiedlichen Abstand c von der Vorderkante 20 der Karte 2 gelesen werden. Aufgrund der unterschiedlichen Breite können also Karten von ISO- bis IATA-Format eingesetzt werden.

Dazu wird erfindungsgemäß der Strichcode 4 während der Bewegung beim Einschieben und/oder Herausziehen der Karte 2 durch den Schlitz 6 in den bzw. aus dem Innenraum 8 mit den Leseköpfen 10, 11 gelesen.

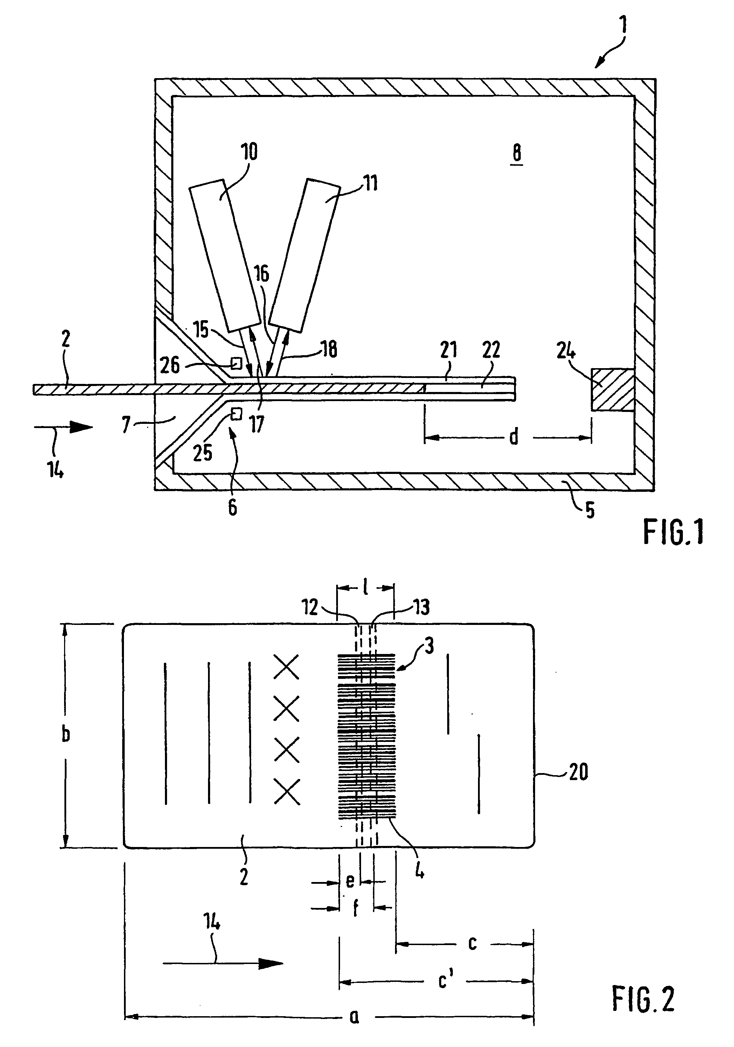

Dies wird dadurch ermöglicht, dass der Innenraum 8 zum Einführen der Karte 2 so lang ausgebildet ist, dass man die Karte 2 über die in Figur 1 dargestellte Position hinaus weiter einführen kann und zwar um eine Strecke d, die - selbst bei der einzuführenden Karte 2 mit der größten Länge a - größer ist als der Abstand c' zwischen der Vorderkante 20 der Karte 2 und dem von der Vorderkante 20 abgewandten Ende des Strichcodefeldes 3.

Zur Führung der Karte 2 im Gehäuse 5 können Führungsschienen mit Aufnahmenuten vorgesehen sein, wobei die Führungsschiene 21 an einer Seite mit der Nut 22 in Figur 1 dargestellt ist. In die Längsnuten 22 der Führungsschienen 21 greift die Karte 2 mit ihren beiden Längskanten ein.

Um Karten unterschiedlicher Breite b lesen zu können, weist die Einführöffnung 6 eine Breite auf, die der Breite b der breitesten mit der Vorrichtung zu lesenden Strichcode-Karte 2 entspricht. Den gleichen Abstand besitzen die Böden der Nuten 22 in den beiden Führungsschienen 21 beiderseits der Karte 2.

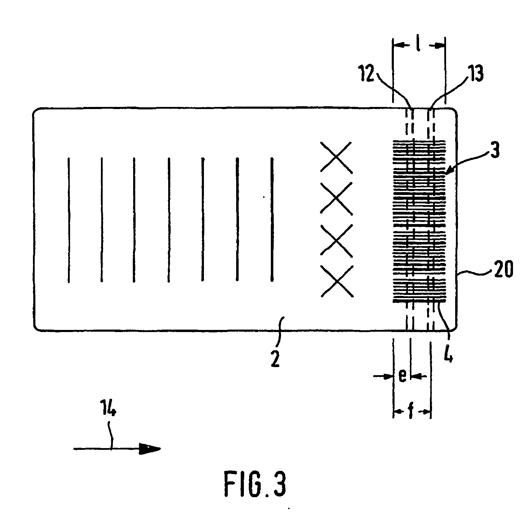

Der Abstand e bzw. f der Abtastzeilen 12, 13 der Leseköpfe 10 und 11 vom Einführschlitz 6 beträgt weniger als die Länge 1 des Strichcodefeldes 3 in Einführrichtung 14. Damit können auch Karten 2 gelesen werden, bei denen der Strichcode 4 in einem großen Abstand c von der Kartenvorderkante 20 angebracht ist. Zudem brauchen Karten 2, bei denen der Abstand c gering oder null ist (Fig. 3), lediglich ein kurzes Stück in den Schlitz 6 zum Lesen des Strichcodes 4 gesteckt zu werden. Der Abstand der Abtastzeilen 12 und 13 voneinander soll möglichst gering sein und vorzugsweise weniger als die Länge l des Strichcodes 4 betragen.

Damit die Abtastzeilen 12, 13 der Leseköpfe 10, 11 möglichst knapp hinter dem Einführschlitz 6 verlaufen, ist insbesondere der hintere IR-Lesekopf 11 schräg angeordnet und zwar so, dass sein Lichtstrahl 18, der vom Strichcode 4 in der Abtastzeile 13 reflektiert wird, schräg nach hinten, also vom Einführschlitz 6 weg zum (nicht dargestellten) optisch/elektrischen Wandler des Lesekopfes 11 zurückfällt.

Bei einer Karte 2 mit einer geringen Breite b besteht die Gefahr, dass sie so schräg in den Einführschlitz 6 eingeführt wird, dass die Abtastzeilen 12, 13 nicht mehr das gesamte Strichcodefeld 3 überstreichen und damit das Strichcodefeld 3 nicht mehr vollständig abgetastet wird.

Um dies zu verhindern, ist der Anschlag 24 vorgesehen, der senkrecht zur Karteneinführrichtung 14 verläuft. Dadurch wird die Karte 2, wenn die Vorderkante 20 über die gesamte Breite b an der Anschlagleiste 24 anschlägt, in Einführrichtung 14 ausgerichtet. Der Strichcode 4 kann dann zumindest beim Herausziehen der Karte 2 vollständig gelesen werden. Der Anschlag 24 kann starr, jedoch auch variabel einstellbar in Karteneinführrichtung 14 ausgebildet sein.

Um die Breite der Karte 2 zu erfassen, kann eine Lichtschranke vorgesehen sein, wie durch die Lichtquelle 26 und die Fotodioden 25 angedeutet, die zwischen Einführschlitz 6 und den Abtastzeilen der Leseköpfe 10, 11 angeordnet sind.

## Patentansprüche

1. System, das eine Lesevorrichtung (1) und mehrere, mit der Lesevorrichtung (1) lesbare Berechtigungskarten (2) unterschiedlicher Länge (a) und Breite (b) mit einem Feld (3) mit einem Strichcode (4) umfasst,
wobei die Lesevorrichtung (1) ein Gehäuse (5) mit einer schlitzförmigen Einführöffnung (6) zum Einführen einer der Karten(2) mit quer zur Einführrichtung (14) der Karte (2) verlaufendem Strichcodefeld (3) in einen Innenraum (8), wenigstens einen Lesekopf (10, 11) zum Abtasten des Strichcodes (4) in einer Zeile (12, 13) quer zur Einführrichtung (14) der Karte (2) und einen Anschlag (24) zum Geradrichten einer eingeführten Karte (2) in dem Gehäuse (5) aufweist,
wobei die Karte (2) der Länge nach durch die Einführöffnung (14) in den Innenraum (8) eingeführt werden kann, die Breite der Einführöffnung (6) der Breite (b) der breitesten einzuführenden Karte (2) entspricht, die Karte (2) über die Abtastzeile (12, 13) des Lesekopfs (10, 11) hinaus bis zum Anschlag (24) um eine Strecke (d) weiter einführbar ist, die selbst bei der Karte (2) mit der größten Länge (a) größer ist als der Abstand (c') zwischen der Vorderkante (20) der Karte (2) und dem von der vorderkante (20) abgewandten Ende des Strichcodefeldes (3)
und wobei der Lesekopf (15, 16) als optisch-elektrischen Wandler einen Charge-Coupled-Device-Liniensensor aufweist, der sich quer zur Einführrichtung (14) über die Karte (2) erstreckt
und dem Lesekopf (10, 11) eine Lichtquelle zugeordnet ist, deren Licht (15, 16), das als zur Einführrichtung (14) quer verlaufende Zeile (12, 13) auf das Strichcodefeld (3) fällt, zu dem Charge-Coupled-Device-Liniensensor des Lesekopfes (15, 16) reflektiert wird.

2. System nach Anspruch 1, **dadurch gekennzeichnet, dass** der wenigstens eine Lesekopf (10, 11) am Einführschlitz (6) angeordnet ist.

3. System nach einem der vorhergehenden Ansprüche, **dadurch gekennzeichnet, dass** die Karte (2) einen Strichcode (4) zum Abtasten mit sichtbarem Licht und einen Strichcode zum Abtasten mit Infrarotlicht und die Lesevorrichtung (1) zwei hintereinander angeordnete Leseköpfe (10, 11) aufweist, wobei der eine Lesekopf (10) den Strichcode (4) mit sichtbarem Licht und der andere Lesekopf (11) den Strichcode mit Infrarotlicht abtastet.

4. System nach Anspruch 3, **dadurch gekennzeichnet, dass** die Abtastzeile (12) des mit sichtbarem Licht abtastenden Lesekopfes (10) und die Abtastzeile (13) des mit Infrarotlicht abtastenden Lesekopfes (11) voneinander einen Abstand aufweisen, der kleiner ist als die Länge (l) des Strichcodefeldes (3) in Einführrichtung (14) der Karte (2).

5. System nach Anspruch 1 oder 2, **dadurch gekennzeichnet, dass** ein Lesekopf vorgesehen ist, der den Strichcode (4) sowohl mit sichtbarem Licht wie mit Infrarotlicht abtastet.

6. System nach einem der vorstehenden Ansprüche, **dadurch gekennzeichnet, dass** die Lesevorrichtung (1) eine Kartenführung aufweist und wenigstens ein weiterer Lesekopf für den sichtbaren Bereich und/oder IR-Bereich auf der anderen Seite der Kartenführung angeordnet ist.

7. System nach einem der vorstehenden Ansprüche 1 bis 5, **dadurch gekennzeichnet, dass** die Lesevorrichtung (1) eine Kartenführung aufweist und auf der einen Seite der Kartenführung wenigstens ein Spiegel angeordnet ist, der das Licht (15, 16) der Lichtquelle zu dem Lesekopf oder Leseköpfen (10, 11) auf der anderen Seite der Kartenführung umlenkt.

8. System nach Anspruch 1, **dadurch gekennzeichnet, dass** der Anschlag (24) starr oder variabel einstellbar ausgebildet ist.

9. System nach einem der vorhergehenden Ansprüche, **dadurch gekennzeichnet, dass** ein die Länge (l) des Strichcodefeldes (3) in Karteneinführrichtung (14) und/oder die Länge des Strichcodefeldes (3) quer zur Karteneinführrichtung erfassender Sensor vorgesehen ist.

10. System nach einem der vorhergehenden Ansprüche, **dadurch gekennzeichnet, dass** ein die Breite der Karte (2) erfassender Sensor (25, 26) vorgesehen ist.

11. System nach Anspruch 9 oder 10, **dadurch gekennzeichnet, dass** der die Länge (l) des Strichcodefeldes (3) in und/oder quer zur Karteneinführrichtung (14) erfassende Sensor und/oder der die Breite der Karte (2) erfassende Sensor (25, 26) zwischen dem Einführschlitz und der Abtastzeile (12, 13) des Lesekopfes (10, 11) angeordnet ist.

12. System nach einem der vorhergehenden Ansprüche, **dadurch gekennzeichnet, dass** zwischen dem Einführschlitz (6) und der Abtastzeile (12, 13) des Lesekopfes (10, 11) ein Sensor vorgesehen ist, der die vorderkante (20) der eingeführten Karte (2) erfasst und bei erfasster Karte (2) den Lesekopf (10, 11) einschaltet.

## Claims

1. A system comprising a reading device (1) and a plurality of authorization cards (2) of different length (a) and width (b) readable with the reading device (1) with a field (3) with a bar code (4),
the reading device (1) having a housing (5) with a slot-shaped insertion opening (6) for inserting one of the cards (2) with a bar code field (4) extending perpendicular to the insertion direction (14) into an interior space (8), at least one reading head (10, 11) for scanning the bar code (4) in a line (12, 13) perpendicular to the insertion direction (14) of the card (2), and a stop (24) for straightening an inserted card (2) in the housing (5),
wherein the card (2) is inserted lengthwise through the insertion opening (14) into the interior space (8), the width of the insertion opening (6) corresponds to the width (b) of the widest card (2) to be inserted, the card (2) is insertable further beyond the scan line (12, 13) of the reading head (10, 11) as far as the stop (24) by a path (d) that, even with the card (2) with the greatest length (a), is greater than the distance (c') between the leading edge (20) of the card (2) and the end of bar code field (3) facing away from the leading edge (20),
and wherein the reading head (15, 16) has as an optoelectric transducer a charge coupled device line sensor that extends across the card (2) perpendicular to the insertion direction (14),
and the reading head (10, 11) has a light source associated therewith whose light (15, 16), which falls on the bar code field (3) as a line (12, 13) extending perpendicular to the insertion direction (14), is reflected to the charge coupled device line sensor of the reading head (15, 16).

2. The system according to claim 1, **characterized in that** the at least one reading head (10, 11) is disposed at the insertion slot (6).

3. The system according to either of the above claims, **characterized in that** the card (2) has a bar code (4) for scanning with visible light and a bar code for scanning with infrared light and the reading device (1) has two reading heads (10, 11) disposed behind each other, one reading head (10) scanning the bar code (4) with visible light and the other reading head (11) scanning the bar code (4) with infrared light.

4. The system according to claim 3, **characterized in that** the scan line (12) of the reading head (10) scanning with visible light and the scan line (13) of the reading head (11) scanning with infrared light have a distance apart that is smaller than the length (*l*) of the bar code field (3) in the insertion direction (14) of the card (2).

5. The system according to claim 1 or 2, **characterized in that** a reading head is provided for scanning the bar code (4) both with visible light and with infrared light.

6. The system according to any of the above claims, **characterized in that** the reading device (1) has a card guide and at least one further reading head for the visible region and/or IR region is disposed on the other side of the card guide.

7. The system according to any of above claims 1 to 5, **characterized in that** the reading device (1) has a card guide and at least one mirror is disposed on one side of the card guide for deflecting the light (15, 16) from the light source to the reading head or heads (10, 11) on the other side of the card guide.

8. The system according to claim 1, **characterized in that** the stop (24) is formed to be rigid or variably adjustable.

9. The system according to any of the above claims, **characterized in that** a sensor is provided for detecting the length (*l*) of the bar code field (3) in the card insertion direction (14) and/or the length of the bar code field (3) perpendicular to the card insertion direction.

10. The system according to any of the above claims, **characterized in that** a sensor (25, 26) is provided for detecting the width of the card (2).

11. The system according to claim 9 or 10, **characterized in that** the sensor detecting the length (*l*) of the bar code field (3) in and/or perpendicular to the card insertion direction (14) and/or the sensor (25, 26) detecting the width of the card (2) is disposed between the insertion slot and the scan line (12, 13) of the reading head (10, 11).

12. The system according to any of the above claims, **characterized in that** a sensor is provided between the insertion slot (6) and the scan line (12, 13) of the reading head (10, 11) for detecting the leading edge (20) of the inserted card (2) and switching on the reading head (10, 11) when the card (2) is detected.

## Revendications

1. Système comprenant un dispositif de lecture (1) et plusieurs cartes d'autorisation (2) de différentes longueur (a) et largeur (b) lisibles avec le dispositif de lecture (1) et comportant un champ (3) avec un code-barres (4),
le dispositif de lecture (1) présentant un boîtier (5) avec une ouverture d'introduction (6) en forme de fente pour introduire dans un espace intérieur (8) une des cartes (2) avec un champ de code-barre (3) s'étendant transversalement à la direction d'introduction (14) de la carte (2), au moins une tête de lecture (10, 11) pour balayer le code-barres (4) dans une ligne (12, 13) transversalement à la direction d'introduction (14) de la carte (2), et une butée (24) pour redresser une carte (2) introduite dans le boîtier (5),
la carte (2) pouvant être introduite en long dans l'espace intérieur (8) à travers l'ouverture d'introduction (14), la largeur de l'ouverture d'introduction (6) correspondant à la largeur (b) de la carte (2) à introduire la plus large, la carte (2) pouvant être introduite encore au-delà de la ligne de balayage (12, 13) de la tête de lecture (10, 11) jusqu'à la butée 24, sur une section (d) qui, même dans le cas de la carte (2) possédant la plus grande longueur (a), est plus grande que la distance (c') entre l'arête antérieure (20) de la carte (2) et l'extrémité du champ de code-barres (3) qui est détournée de l'arête antérieure (20),
et la tête de lecture (15, 16) présentant à titre de convertisseur optique électrique un capteur linéaire à dispositif semi-conducteur à couplage de charge (CCD) qui s'étend sur la carte (2) transversalement à la direction d'introduction
et à la tête de lecture (10, 11) étant associée une source lumineuse dont la lumière (15, 16) qui tombe sur le champ de code-barres (3) sous forme de ligne (12, 13) s'étendant transversalement à la direction d'introduction (14), est réfléchie vers le capteur linéaire CCD de la tête de lecture (15, 16).

2. Système selon la revendication 1, **caractérisé en ce que** ladite au moins une tête de lecture (10, 11) est agencée sur la fente d'introduction (6).

3. Système selon l'une des revendications précédentes, **caractérisé en ce que** la carte (2) présente un code-barres (4) pour balayer avec de la lumière visible et un code-barres (4) pour balayer avec de la lumière infrarouge, et le dispositif de lecture (1) présente deux têtes de lecture (10, 11) agencées l'une derrière l'autre, ladite une tête de lecture (10) balayant le code-barres (4) avec de la lumière visible et l'autre tête de lecture (11) balayant le code-barres avec de la lumière infrarouge.

4. Système selon la revendication 3, **caractérisé en ce que** la ligne de balayage (12) de la tête de lecture (10) balayant avec de la lumière visible et la ligne de balayage (13) de la tête de lecture (11) balayant avec de la lumière infrarouge présentent une distance l'une par rapport à l'autre qui est inférieure à la longueur (l) du champ code-barres (3) en direction d'introduction (14) de la carte (2).

5. Système selon la revendication 1 ou 2, **caractérisé en ce qu'**il est prévu une tête de lecture qui balaye le code-barres (4) tant avec de la lumière visible qu'avec de la lumière infrarouge.

6. Système selon l'une des revendications précédentes, **caractérisé en ce que** le dispositif de lecture (1) présente un guidage de carte, et au moins une autre tête de lecture pour la zone visible et/ pour la zone infrarouge est agencée de l'autre côté du guidage de carte.

7. Système selon l'une des revendications précédentes 1 à 5, **caractérisé en ce que** le dispositif de lecture (1) présente un guidage de carte, et sur un côté du guidage de carte est agencé au moins un miroir qui dévie la lumière (15, 16) de la source lumineuse vers la tête de lecture ou vers les têtes de lecture (10, 11) de l'autre côté du guidage de carte.

8. Système selon la revendication 1, **caractérisé en ce que** la butée (24) est réalisée rigide ou à réglage variable.

9. Système selon l'une des revendications précédentes, **caractérisé en ce qu'**il est prévu un capteur détectant la longueur (l) du champ de code-barres (3) en direction d'introduction (14) de la carte et/ou la longueur du champ de code-barres (3) transversalement à la direction d'introduction de la carte.

10. Système selon l'une des revendications précédentes, **caractérisé en ce qu'**il est prévu un capteur (25, 26) détectant la largeur de la carte (2).

11. Système selon la revendication 9 ou 10, **caractérisé en ce que** le capteur (25, 26) détectant la longueur (l) du champ de code-barres (3) en direction et/ou transversalement à la direction d'introduction (14) de la carte est agencé entre la fente d'introduction et la ligne de balayage (12, 13) de la tête de lecture (10, 11).

12. Système selon l'une des revendications précédentes, **caractérisé en ce que** entre la fente d'introduction (6) et la ligne de balayage (12, 13) de la tête de lecture (10, 11) est prévu un capteur qui détecte l'arête antérieure (20) de la carte introduite et qui met en marche la tête de lecture (10, 11) lorsque la carte (2) est détectée.
